# EUROPEAN PATENT SPECIFICATION

(11) **EP 4 292 055 B1**
(45) Date of publication and mention of the grant of the patent: **29.07.2026**
(21) Application number: 21739022.8
(22) Date of filing: 18.06.2021
(51) Int. Cl.: G06V 10/26, G06T 7/194, G06T 19/00, G06V 10/82, G06V 20/58, G06V 20/64, G06F 18/2413

(54) **METHOD FOR ANNOTATING OBJECTS IN AN IMAGE AND DRIVER ASSISTANT SYSTEM FOR PERFORMING THE METHOD**
VERFAHREN ZUM KENNZEICHNEN VON OBJEKTEN IN EINEM BILD UND FAHRERASSISTENZSYSTEM ZUR DURCHFÜHRUNG DES VERFAHRENS
PROCÉDÉ D'ANNOTATION D'OBJETS DANS UNE IMAGE ET SYSTÈME D'ASSISTANCE AU CONDUCTEUR POUR LA MISE EN OEUVRE DU PROCÈDÈ

(43) Date of publication of application: 20.12.2023
(73) Proprietor: CARIAD SE, 38440 Wolfsburg (DE)
(72) Inventor: KLINGENHÖFER, Steffen, 10439 Berlin (DE)
(74) Representative: Hofstetter, Schurack & Partner
(86) International application number: PCT/EP2021/066710
(87) International publication number: WO 2022/263004

(56) References cited:
- US-A1- 2021 004 566

## Description

The present invention relates to a method for annotating objects in an image as well as to a method for training a machine learning algorithm. Furthermore, the present invention discloses an advanced driver assistant system (ADAS) for a vehicle comprising the trained machine learning algorithm.

The US 2021 / 0 004 566 A1 discloses methods and apparatus provided for 3D object bounding for 2D image data for use in an assisted driving equipped vehicle. In various embodiments, an apparatus includes a camera operative to capture a two dimensional image of a field of view, a lidar operative to generate a point cloud of the field of view, a processor operative to generate a three dimensional representation of the field of view in response to the point cloud, to detect an object within the three dimensional representation, to generate a three dimensional bounding box in response to the object, to project the three dimensional bounding box onto the two dimensional image to generate a labeled two dimensional image, and a vehicle controller to controlling a vehicle in response to the labeled two dimensional image

### Background

Machine learning methods and algorithms are well known in the field of computer vision and in the last years they have been successfully used for different tasks varying from medical images to perception tasks in autonomous driving applications. Examples of those tasks are especially semantic segmentation and object classification.

To be reliable, such machine learning algorithms require a large amount of annotated ("labelled") image data for training.

Typically, human agents have to manually annotate the data by using annotation computer programs, where the images to be annotated have been uploaded. Through a user interface the human agent draws geometric figures, like for example bounding boxes or polygons, around each relevant object in an image, which has to be annotated.

This can be particularly difficult when many objects or objects of complex shape are present in an image and it is difficult to properly separate and isolate them. In those cases, the annotation often requires the creation of detailed shapes and multi iterations and refinements to reach the desired quality.

This is time consuming and expensive.

It is an object of the present invention to provide a more efficient annotation system, which allows to annotate objects in a simpler and user-friendly way.

This is achieved by the method disclosed in claim 1 of the present application.

The method uses depth information for estimating the geometry of the two-dimensional image.

In order to estimate the three-dimensional geometry of a two-dimensional image, information about the image's depth are needed.

In a two dimensional image each pixels is associated with x,y coordinates. The z coordinates (i.e. the depth) must then be measured and/or estimated.

In a preferred embodiment the depth is estimated by using data obtained by a machine leaning algorithm. Preferably the machine learning algorithm is previously trained by using stereo camera data or data from another three-dimensional sensor like for example a LiDAR or a depth camera.

The machine learning algorithm can be a neuronal network, preferably a convolutional network, although also different types of neuronal network architectures can be used.

The machine learning can be a supervised or unsupervised machine learning algorithm.

In another preferred embodiment the machine learning algorithm is trained by using a sequence of images from a single camera. The input of the machine learning algorithm is formed by at least two successive images of a monocamera. As output, the machine learning algorithm generates depth information of the images.

The machine learning can be a supervised or unsupervised machine learning algorithm.

The machine learning system trained by one of the methods explained above can provide an estimation of the depth of a two-dimensional image. In particular the trained machine learning system receives as input the two-dimensional image (source image), which has to be annotated, and provides as output a depth value for each pixel of the two-dimensional image. In this way each pixel in the two dimensional image is now associated with (x,y,z) coordinates.

In some embodiments the depth of the image to be annotated is directly provided by or derived from three-dimensional sensor measurements. Such sensor can be a LiDAR, a radar, a depth camera, a stereo-camera, or a multi-camera system or a combination thereof. Those sensors can provide information about depth in images.

In yet another preferred embodiment the depth is estimated by a sequence of images taken by a monocamera.

In this method features such as for example corner points or line segments are tracked from one image to the successive images and are used to produce estimates of the camera positions and orientations as well as of the coordinates of the tracked features. This produces a point cloud of x,y,z, coordinates for the given image.

The method is well known in literature under the name structure from motion.

By using one of the above mentioned methods, the depth information for each pixel in the image can be measured and/or estimated. Particularly the above mentioned methods associate each pixel in the image with an x,y,z coordinate, generating in such a way a depth image

In a preferred embodiment, the image is then uploaded in a computer implemented annotation program with a user interface. Such programs are known in the literature and allow a user to annotate (i.e. label) objects in the images by drawing a geometric figure around each object.

Preferably a polygon is drawn by the user encompassing all the points belonging to the object that has to be annotated.

The user draws the geometric figure typically with the help of a mouse and/or of a computer's keyboard.

In the case that more objects are present in an image, it is usually difficult for the user to recognize and separate them. As consequence, it is very difficult to accurately draw the geometric figure around the objects, which have to be annotated. Oft the user is required to adjust the geometric figure in several iterations: such procedure is very tedious and requires a long time.

It is an objective of the present invention to improve the annotation procedure by implementing a faster and simpler method for annotation.

The present application discloses a method for isolating the objects in the image to annotate. Isolating objects in the present application means to separate the objects to be annotated from the background and/or from other objects present in the images. For example, if the image contains a table with a vase on it and the table and the vase should be annotated separately, the present application provides a method to separate them from the background and from each other, so allowing the user to easily annotate them by drawing a geometric figure around the table and a geometric figure around the vase in few clicks.

The procedure for isolating objects in a way that the annotation is facilitated is described below.

Each pixel of the two-dimensional image to be annotated is associated with(x,y,z) coordinates corresponding to a three-dimensional representation of the two-dimensional image. The depth information (i.e. the z coordinate) is retrieved with one of the methods explained above.

The three-dimensional geometry provides information about object heights and depth as well as about their position in the image.

In a preferred embodiment, the first step in order to isolate the objects is to remove the ground plane in the image.

The ground plane in the image is defined as the plane that most of the objects to be annotated are located on. In a preferred embodiment, the ground plane is defined as the plane where x=0 and y=0.The ground plane can be removed manually by a user or automatically by an algorithm.

According to the invention, the viewpoint in the three-dimensional representation is changed. The viewpoint can be changed automatically by an algorithm or manually by a user. By changing the viewpoint, a better view of the object to be annotated can be achieved. Particularly, the chosen viewpoint could be such that the object can be separated with respect to other objects present in the image and/or that a particular feature of the object can be better viewed from the user and consequently better annotated.

For example, the user could choose to use a top-view or a side view.

The procedure above can be repeated to isolate different objects in an image and/or parts of objects, which should be annotated separately.

Once that the object is isolated, the user can draw a geometric figure around the object that he/she wants to annotate. The geometric figure can be a polygon, a bounding box or any other geometric figure which could encompass the object to be annotated in a convenient way.

The geometric figure encompasses all the data points belonging to the object.

A label is then assigned to the object in the geometric figure. A label describes the class to which an object belongs.

The procedure above can be repeated until all the objects present in the image are properly annotated.

The so annotated data points are then transferred back into a two-dimensional annotation image that corresponds in its perspective to the source image. In a preferred embodiment the transfer is accomplished by identifying those pixels in the two-dimensional source image corresponding to the pixels of an annotated object in the three-dimensional representation and assigning the same annotation label to those two-dimensional pixels. In yet another preferred embodiment the transfer is accomplished by a graphical projection that displays the annotated three-dimensional data points on the two-dimensional image plane of the original camera.

In a preferred embodiment the projection takes into account the intrinsic and extrinsic parameters of the sensor which took the two-dimensional source image.

The so annotated objects can be used for training a machine learning algorithm.

Preferably the machine learning is a supervised machine learning algorithm.

In a preferred embodiment the machine learning algorithm is an object classifying algorithm. Such algorithm classifies objects in an image with respect to one or more classes. Examples of classes are vehicles, pedestrian, traffic signs and so one.

In yet another preferred embodiment the machine learning algorithm is a semantic segmentation algorithm. Semantic segmentation refers to the process of linking each pixel in an image to a class.

The machine learning algorithm is preferably a neuronal network, for example a convolutional network.

The machine learning algorithm can be trained offline or online.

The trained machine learning algorithm can be implemented in an advanced driver assistant system. Advanced driver assistant systems (ADAS) are electronic systems that assist drivers in driving and parking functions.

Examples of such systems are adaptive cruise control, collision avoidance systems, lane change and lane keep assistance systems, parking systems.

Such systems have become more and more important especially for autonomous driving systems from level 2 to level 5.

ADAS systems use various types of sensors to detect and monitor the surrounding of the vehicle. Example of those sensors are monocameras, stereo-cameras, depth cameras, radar and LiDAR. The aforementioned sensors can be also combined together.

For example, an ADAS system could be equipped with a camera belt, wherein several cameras are placed on the front, back and sides of a vehicle so providing a 360° view of the vehicle's surrounding.

In a preferred embodiment of the present invention images taken by the aforementioned sensors are processed by the trained machine learning algorithm as output.

The trained machine learning algorithm can provide as output a semantic segmentation or an object classification.

The outputs of the machine learning algorithm are further used by the ADAS system to control the vehicle. For example, a trajectory could be estimated or a collision could be avoided based on the information from the machine learning algorithm.

Special embodiments of the present invention are described below.
- Fig 1: describes a unsupervised machine learning method for providing depth information
- Fig 2: shows a flow diagram describing an supervised machine learning method for providing depth information
- Fig 3a: shows a two-dimensional image taken by a camera mounted on a vehicle.
- Fig 3b: is an example of a depth image associated with image 3a.
- Fig 3c: is an example of a pointcloud representation associated with image 3a.
- Fig 4: shows a flow diagram describing a method for annotating objects according to a preferred embodiment of the present application
- Fig 5: shows an application of the annotation method of the present application.
- Fig. 6: shows a vehicle with a processor comprising a machine learning algorithm trained using the annotated images obtained using the method described in fig. 4.

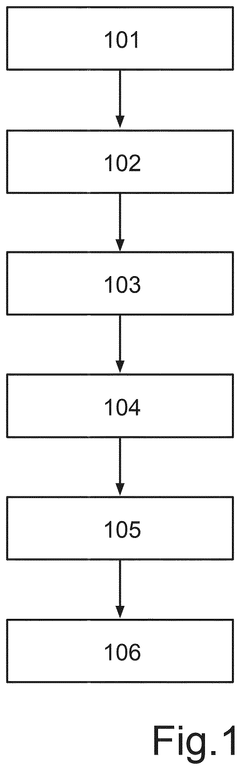

Fig 1 shows a workflow, describing a method for providing depth information.

In step 101 the process is started. In Step 102 a sensor captures two-dimensional images of the environment. In a preferred embodiment the sensor is a stereocamera. The stereocamera could be mounted on a vehicle. The stereocamera delivers a pair of stereo.images of the environment. In step 103 image data are generated. In step 104 those image data are sent to a machine learning algorithm. A machine learning algorithm can be stored in a processor mounted on a vehicle. Alternatively, the machine learning algorithm can be stored in an external server or cloud. The images data serve as input for the machine learning algorithm.

In step 105 the machine learning algorithm is trained.

In a preferred embodiment the machine learning algorithm is a neural network, preferably an unsupervised neural network with a photometric loss function. The photometric loss function measures the difference between the first input image and the (inverse) warped subsequent image based on the predicted optical flow by the network. Photometric loss functions are well known in literature (see for example arxiv.1608.05842).

In step 106 after the training the machine learning algorithm delivers as output a depth image, i.e. an image in which each pixel is associated with (x,y,z) coordinates.

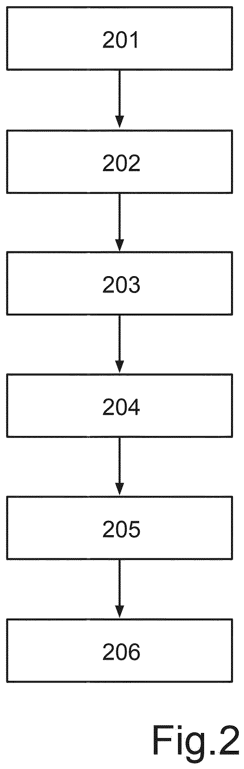

Fig. 2 describes a second preferred embodiment for generating depth images. In step 201 the process is started. In Step 202 a sensor captures a two-dimensional image of the environment. In a preferred embodiment the sensor is a stereocamera. The stereocamera delivers a pair of stereo.images of the environment. In step 203 image data are generated. In step 204 the image data are processed in order to extract depth information. Step 204 can be executed manually by a human or automatically by a computer algorithm.

The processing can for example contain the step of generating a depth map. In step 205 a machine learning algorithm is trained using as input the depth information obtained in step 204 and a RGB image taken by a sensor, preferably a camera. The machine learning algorithm is preferably a neural network trained by using a regression loss function.

As output in step 206 the machine learning algorithm delivers after the training a depth image, i.e. an image in which each pixel is associated with (x,y,z) coordinates.

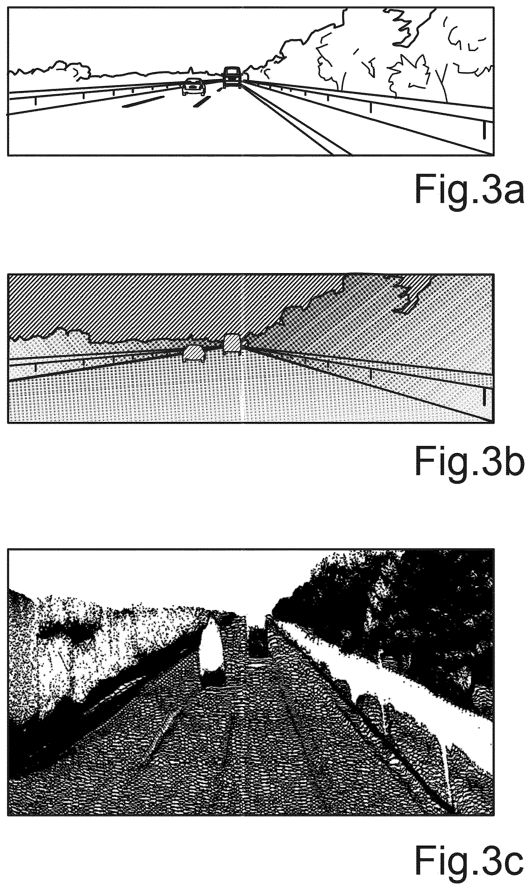

Fig 3a shows a two-dimensional image taken by a camera mounted on a vehicle. In the image several objects like other vehicles, guardrails and trees can be clearly observed. In the two-dimensional image there is no information about the depth of the objects. Fig 3a is then sent as input to a machine learning system trained by using one of the methods explained above.

Fig 3b is the output of the machine learning algorithm: the image of Fig 3b encodes the depth value for each pixel of the image shown in Fib 3a (which is illustrated in Fig. 3b by a varying grey value in so-called halftone reproduction and hatching).

Fig 3c shows a three-dimensional representation of the scene depicted in 3a derived from the depth image depicted in Fig 3b. Such a representation could also be directly estimated for example as an output of a trained machine learning system. Each pixel of the figure 3a is now associated with a (x,y,z) coordinates that represent the pixels position in three-dimensional space.

Several information could be extracted from such point cloud: for example, the height of guardrails could be estimated.

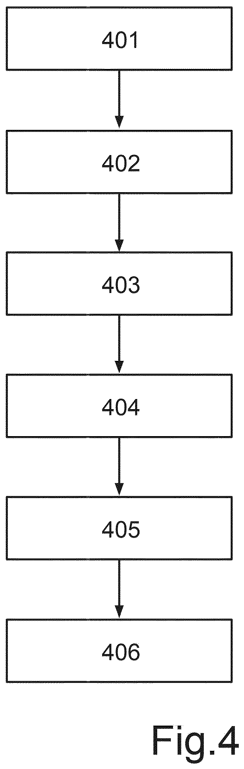

Fig 4 shows a flow diagram describing a method for annotating objects according to a preferred embodiment of the present application. In step 401 the process is started. In Step 402 an image containing objects to be annotated is uploaded in an annotation program. The image comprises depth information, such depth information can be provided by one of the methods described above. The objects to be annotated can be for example vehicles, traffic signs, pedestrian.

The annotation program comprises a user interface through which a user can interact with the uploaded image. Particularly the user could use a mouse or a keyboard to change or modify the image to be annotated. The goal is to isolate the object to be annotated so that the user can easily draw a geometric figure around it. Possible modifications or changes of the image are discussed below.

In step 403 the ground plane is removed. The ground plane is defined as the plane where most of the objects to be labelled are located on.

The the viewpoint in the three-dimensional representation is changed in order to better isolate the objects to be annotated. This change can be done by a user, for example by rotating the image by using a mouse or a keyboard. Changing the viewpoint is advantageous as particular features of the object can be better displayed and other discarded.

In step 404 the user draws a geometric figure around the object to be annotated. The geometric figure is preferably a bounding box, although any other geometric figures adapted to encompass in a convenient way the object to be annotated can be used. The geometric figure encompasses all the points of the object that the user wants to annotate.

In step 405 an annotation label is created for the selected object.

In step 406 the annotated object is projected back into the perspective of the original image.

Steps 403 to 406 can be repeated for each object that the user wants to annotate in a single image.

Steps 403 to 406 can be repeated to isolate parts of objects: for example, one could isolate tyres of a vehicle from the vehicle itself by opportunely rotating and changing the viewpoint of the vehicle.

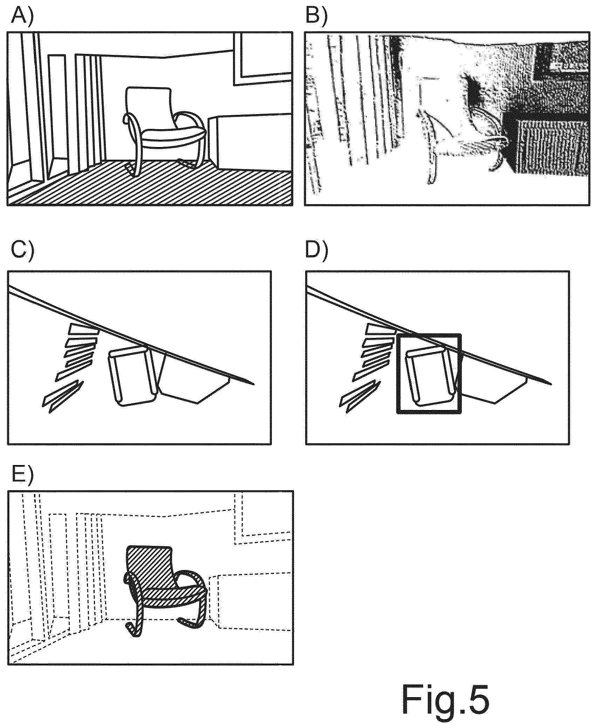

Fig 5 shows a further example of the annotation method of the present invention. Step a) shows an image of the original scene in which objects have to be annotated. Each pixel in the image has been associated with a (x,y,z) coordinate that represents its position in three-dimensional space (cf. Fig 3). The information about the depth is obtained accordingly to one of the methods previously described. In the image several objects can be seen: a chair, a painting, a sideboard. The image is preferably uploaded in a computer annotation program.

As example, a user should annotate the chair. As it can be seen it is difficult for the user to draw a geometric figure around the chair alone without also erroneously encompassing the sideboard or part of the floor.

In step b) the ground plane is removed for the depth image. In many cases the removal of the ground plane can be done in a fast and easy way either by the user or by an automatic algorithm.

In step c) the viewpoint of the depth image is changed to a top view. This can be done for example by rotating the image with the help of a mouse until the appropriate viewpoint is reached. In the present example the top view allows the user to isolate the chair form the sideboard and the wall.

In step d) the user draws a geometric figure around the chair, so annotating it.

The geometric figure can be drawn with one click by the user as in the top view the chair is clearly isolated form the sideboard and the walls.

The geometric figure is in this example a rectangular bounding box and encompasses all the points associated with the chair irrespective of their elevation.

In step e) the annotated chair is projected back in the original image. Shown here is an overlay of the original image and the obtained annotation image.

The annotated images obtained by the method explained above can be used to train a machine learning algorithm. Preferably the machine learning algorithm is a semantic segmentation algorithm or an object detection algorithm.

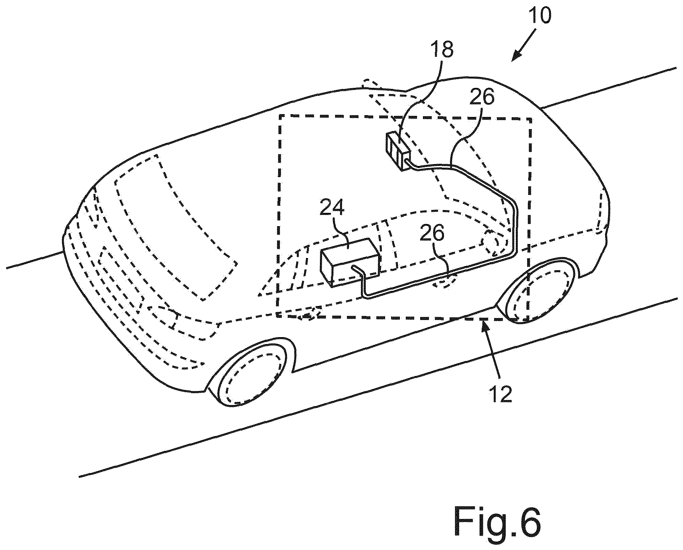

In a preferred embodiment the trained machine learning algorithm is stored on a processor in a vehicle as explained in Fig. 6.

Fig 6 shows a vehicle 10 with a device 12 connected to the vehicle 10. The device 12 comprises one or more sensors 18 to capture the environment in front of the vehicle. The sensor can be a camera, particularly a monocamera.

The device 12 comprises also a processor 24, connected to the sensor 18 with a cable 26. Alternatively, the processor 24 can be located outside the vehicle 10, for example in an external server or cloud. The machine learning algorithm trained by using the annotated data obtained by the method explained in fig 4 and fig 5 is stored in the processor 24. The machine learning algorithm takes as input the images captured by the sensor 18.

In a preferred embodiment the machine learning algorithm is an object classification algorithm. Given an input image, the machine learning algorithm classifies as output the objects present in the input image according to classes. Examples of classes are vehicles, pedestrian, traffic signs, traffic lights and so on.

In another preferred embodiment the machine learning algorithm stored in the processor 24 is a semantic segmentation algorithm.

Given as input the image taken by the sensor 18, the semantic segmentation algorithm labels each pixel of the image with a corresponding class. For example, the algorithm could label each pixel of the image according to the class "road", "vehicle", "pedestrian".

The results of the machine learning algorithm can be used for controlling the vehicle, for example by determining a trajectory to avoid collision with other vehicles and/or objects.

Various features, aspects, and embodiments have been described herein. The features, aspects, and embodiments are susceptible to combination with one another as well as to variation and modification, as will be understood by those having skill in the art.

## Claims

1. A computer implemented method for annotation of one or more objects in a two-dimensional source image, the method comprising the steps of
(i) Estimating a three-dimensional geometry of the two-dimensional source image,
(ii) Isolating the one or more objects in the three-dimensional geometry of step (i), wherein the objects are isolated by changing the viewpoint of the objects,
(iii) Selecting each isolated object in step (ii) by drawing a geometric figure around each of the isolated objects,
(iv) Assigning an annotation label for the object selected in step (iii),
(v) Projecting back the selected object into a two-dimensional annotation image corresponding to the original two-dimensional source image.

2. Method according to claim 1, wherein in step (i) the three-dimensional geometry is calculated by assigning a depth value to each pixel of the two-dimensional source image.

3. Method according to claim 1 or 2, wherein the three-dimensional geometry in step (i) is estimated by a deep learning method or a structure from motion method.

4. Method according to claim 1 or 2 wherein the three-dimensional geometry in step (i) is provided by or derived from a sensor measurement, such sensor being a stereo-camera, a LiDAR, a Radar, a depth camera or a combination thereof.

5. Method according to any of the previous claims wherein in step (ii) the objects are isolated by removing the ground plane in the two-dimensional source image.

6. Method according to claim 5, wherein the removing of the ground plane and/or the change of the viewpoint is performed manually by a user.

7. Method according to claim 5 wherein the removing of the ground plane and/or the change of the viewpoint is performed by an algorithm without human interaction.

8. Method according to any of the previous claims, wherein the geometric figure is a polygon or a bounding box or a three-dimensional geometric figure.

9. Method according to any of the previous claims, wherein steps (ii) to (v) are repeated to annotate one or more objects.

10. A method for training a machine learning algorithm by using the annotated training data obtained with the method according to claims 1 to 9, wherein the machine learning algorithm is a semantic segmentation algorithm.

11. Method according to claim 10, wherein the machine learning algorithm is a supervised neural network.

12. Advanced driver assistant system for a vehicle comprising one or more sensors for taking images of the vehicle's surrounding, a processor and a machine system trained according to claim 10 to 11 stored in the processor.

13. The advanced driver system of claim 12, wherein the one or more sensors is a monocamera, a stereocamera, a LiDAR, a Radar, a 3D Camera or a combination thereof.

## Patentansprüche

1. Computerimplementiertes Verfahren zur Annotation eines oder mehrerer Objekte in einem zweidimensionalen Quellbild, wobei das Verfahren folgende Schritte umfasst
(i) Schätzen einer dreidimensionalen Geometrie des zweidimensionalen Quellbildes,
(ii) Isolieren des einen oder der mehreren Objekte in der dreidimensionalen Geometrie aus Schritt (i), wobei die Objekte isoliert werden, indem der Blickpunkt der Objekte geändert wird,
(iii) Auswählen jedes in Schritt (ii) isolierten Objekts, indem eine geometrische Figur um jedes der isolierten Objekte gezeichnet wird,
(iv) Zuteilen eines Annotationsetiketts für das in Schritt (iii) ausgewählte Objekt,
(v) Rückprojizieren des ausgewählten Objekts in ein zweidimensionales Annotationsbild, das dem zweidimensionalen Originalquellbild entspricht.

2. Verfahren nach Anspruch 1, wobei in Schritt (i) die dreidimensionale Geometrie berechnet wird, indem jedem Pixel des zweidimensionalen Quellbildes ein Tiefenwert zugeteilt wird.

3. Verfahren nach Anspruch 1 oder 2, wobei die dreidimensionale Geometrie in Schritt (i) durch ein tiefes Lernverfahren oder eine Struktur aus einem Bewegungsverfahren geschätzt wird.

4. Verfahren nach Anspruch 1 oder 2, wobei die dreidimensionale Geometrie in Schritt (i) durch eine Sensormessung bereitgestellt oder daraus abgeleitet wird, wobei ein derartiger Sensor eine Stereokamera, ein LiDAR, ein Radar, eine Tiefenkamera oder eine Kombination derselben ist.

5. Verfahren nach einem der vorhergehenden Ansprüche, wobei in Schritt (ii) die Objekte isoliert werden, indem die horizontale Projektionsebene in dem zweidimensionalen Quellbild entfernt wird.

6. Verfahren nach Anspruch 5, wobei das Entfernen der horizontalen Projektionsebene und/oder das Ändern des Blickpunktes manuell von einem Benutzer ausgeführt werden.

7. Verfahren nach Anspruch 5, wobei das Entfernen der horizontalen Projektionsebene und/oder das Ändern des Blickpunktes von einem Algorithmus ohne menschliche Interaktion ausgeführt werden.

8. Verfahren nach einem der vorhergehenden Ansprüche, wobei die geometrische Figur ein Vieleck oder ein Begrenzungsrahmen oder eine dreidimensionale geometrische Figur ist.

9. Verfahren nach einem der vorhergehenden Ansprüche, wobei die Schritte (ii) bis (v) wiederholt werden, um ein oder mehrere Objekte zu annotieren.

10. Verfahren zum Trainieren eines maschinellen Lernalgorithmus unter Verwendung der annotierten Trainingsdaten, die anhand des Verfahrens nach Anspruch 1 bis 9 erzielt werden, wobei der maschinelle Lernalgorithmus ein semantischer Segmentierungsalgorithmus ist.

11. Verfahren nach Anspruch 10, wobei der maschinelle Lernalgorithmus ein überwachtes neuronales Netzwerk ist.

12. Erweitertes Fahrerassistenzsystem für ein Fahrzeug, das einen oder mehrere Sensoren, um Bilder von der Umgebung des Fahrzeugs aufzunehmen, einen Prozessor und ein nach Anspruch 10 bis 11 trainiertes maschinelles System, das auf dem Prozessor gespeichert ist, umfasst.

13. Erweitertes Fahrerassistenzsystem nach Anspruch 12, wobei der eine oder die mehreren Sensoren eine Monokamera, eine Stereokamera, ein LiDAR, ein Radar, eine 3D-Kamera oder eine Kombination derselben sind.

## Revendications

1. Procédé mis en œuvre par ordinateur pour l'annotation d'un ou de plusieurs objets sur une image source bidimensionnelle, le procédé comprenant les étapes consistant à
(i) estimer une géométrie tridimensionnelle de l'image source bidimensionnelle,
(ii) isoler ledit un ou les plusieurs objets dans la géométrie tridimensionnelle de l'étape (i), les objets étant isolés en changeant le point de vue des objets,
(iii) sélectionner chaque objet isolé à l'étape (ii) en dessinant une figure géométrique autour de chacun des objets isolés,
(iv) attribuer une étiquette d'annotation pour l'objet sélectionné à l'étape (iii),
(v) reprojeter l'objet sélectionné dans une image d'annotation bidimensionnelle correspondant à l'image source bidimensionnelle originale.

2. Procédé selon la revendication 1, dans lequel à l'étape (i) la géométrie tridimensionnelle est calculée en attribuant une valeur de profondeur à chaque pixel de l'image source bidimensionnelle.

3. Procédé selon la revendication 1 ou 2, dans lequel la géométrie tridimensionnelle à l'étape (i) est estimée par un procédé d'apprentissage profond ou une structure issue d'un procédé de mouvement.

4. Procédé selon la revendication 1 ou 2, dans lequel la géométrie tridimensionnelle à l'étape (i) est fournie par ou dérivée à partir d'une mesure de capteur, un tel capteur étant une caméra stéréo, un LiDAR, un radar, une caméra de profondeur ou une combinaison de ceux-ci.

5. Procédé selon l'une quelconque des revendications précédentes, dans lequel à l'étape (ii) les objets sont isolés en retirant le plan géométrique dans l'image source bidimensionnelle.

6. Procédé selon la revendication 5, dans lequel le retrait du plan géométrique et/ou le changement du point de vue sont effectués manuellement par un utilisateur.

7. Procédé selon la revendication 5 dans lequel le retrait du plan géométrique et/ou le changement du point de vue sont effectués par un algorithme sans interaction humaine.

8. Procédé selon l'une quelconque des revendications précédentes, dans lequel la figure géométrique est un polygone ou un cadre de contour ou une figure géométrique tridimensionnelle.

9. Procédé selon l'une quelconque des revendications précédentes, dans lequel les étapes (ii) à (v) sont répétées pour annoter un ou plusieurs objets.

10. Procédé d'entraînement d'un algorithme d'apprentissage machine en utilisant les données d'entraînement annotées obtenues à l'aide du procédé selon les revendications 1 à 9, l'algorithme d'apprentissage machine étant un algorithme de segmentation sémantique.

11. Procédé selon la revendication 10, dans lequel l'algorithme d'apprentissage machine est un réseau neuronal supervisé.

12. Système d'assistance au conducteur évolué pour un véhicule comprenant un ou plusieurs capteurs pour prendre des images de l'environnement du véhicule, un processeur et un système de machine entraîné selon les revendications 10 à 11 stocké dans le processeur.

13. Système d'assistance au conducteur évolué selon la revendication 12, dans lequel ledit un ou les plusieurs capteurs sont une caméra mono, une caméra stéréo, un LiDAR, un radar, une caméra 3D ou une combinaison de ceux-ci.
